# EUROPEAN PATENT APPLICATION

(11) **EP 4 538 646 A1**
(43) Date of publication of application: **16.04.2025**
(21) Application number: 23834472.5
(22) Date of filing: 24.04.2023
(51) Int. Cl.: G01C 21/32

(54) **MAPPING METHOD AND APPARATUS AND COMPUTING DEVICE CLUSTER**

(30) Priority: 06.07.2022 CN 202210799521; 28.09.2022 CN 202211191269
(71) Applicant: Huawei Cloud Computing Technologies Co., Ltd., Guiyang, Guizhou 550025 (CN)
(72) Inventor: ZHOU, Shunbo, Guiyang, Guizhou 550025 (CN); ZHANG, Bo, Guiyang, Guizhou 550025 (CN); WANG, Feng, Guiyang, Guizhou 550025 (CN)
(74) Representative: Thun, Clemens
(86) International application number: PCT/CN2023/090380
(87) International publication number: WO 2024/007694

(57) **Abstract**

A map reconstruction method, a map reconstruction apparatus, a computing device cluster, a computer-readable storage medium, and a computer program product are disclosed, and belong to the field of cloud computing and three-dimensional reconstruction technologies. The map reconstruction method includes: delivering a data collection module to a data collection device in a target scene, so that the data collection device collects scene collection data in the target scene (101); obtaining a scene category of the target scene (102); determining a map reconstruction algorithm corresponding to the scene category (103); and generating, by using the map reconstruction algorithm based on the scene collection data sent by the data collection device, a scene map corresponding to the target scene (104). Therefore, this method can improve map reconstruction accuracy and flexibility.

## Description

This application claims priorities to Chinese Patent Application No. 202210799521.2, filed on July 6, 2022 and entitled "CLOUD MAP RECONSTRUCTION METHOD, APPARATUS, AND SYSTEM", and to Chinese Patent Application No. 202211191269.3, filed on September 28, 2022 and entitled "MAP RECONSTRUCTION METHOD AND APPARATUS, AND COMPUTING DEVICE CLUSTER", both of which are incorporated herein by reference in their entireties.

### TECHNICAL FIELD

This application relates to the field of cloud computing and three-dimensional reconstruction technologies, and in particular, to a map reconstruction method and apparatus, and a computing device cluster.

### BACKGROUND

Currently, reconstructing a map by a robot is a common map reconstruction method. A process of reconstructing the map by the robot may be as follows:

A user places the robot in a map reconstruction scene and controls the robot to move in the map reconstruction scene. When the robot moves, a sensor installed on the robot may collect data of an ambient environment, for example, collect point cloud data of the ambient environment by using a lidar, or collect image data of the ambient environment by using a camera. Then, the robot may perform map reconstruction processing on the collected environment data by using a preset map reconstruction algorithm, to obtain a two-dimensional map or a three-dimensional map corresponding to the map reconstruction scene.

Due to a limited processing capability of a processor set in the robot, the map reconstruction algorithm set in the robot is also simple. Therefore, the map currently obtained by the robot has a large error.

### SUMMARY

Embodiments of this application provide a map reconstruction method and apparatus, and a computing device cluster, to improve map reconstruction accuracy. The technical solutions are as follows.

According to a first aspect, a map reconstruction method is provided. The map reconstruction method includes: delivering a data collection module to a data collection device in a target scene; obtaining a scene category of the target scene, obtaining a map reconstruction algorithm corresponding to the scene category; and generating, by using the map reconstruction algorithm based on the scene collection data sent by the data collection device, a scene map corresponding to the target scene.

The map reconstruction method is applied to a cloud platform, and may be performed by a server that provides a cloud service in the cloud platform. The data collection device is equipped with a sensor for collecting map reconstruction data. The sensor may include a lidar, a camera, an inertial measurement unit (Inertial Measurement Unit, IMU), and the like. The data collection device may be a robot, a mobile phone, a professional data collection device, or the like. The map reconstruction data is scene collection data, and may include point cloud data, map data, pose data, odometer data, and the like. The data collection module may be a data collection notification indicating the data collection device to collect the scene collection data in the target scene; or the data collection module may be a sensor driver corresponding to each sensor in the data collection device, configured to drive the sensor in the data collection device to collect the scene collection data in the target scene.

In the solutions shown in this application, the cloud platform may obtain the scene category of the target scene in which map reconstruction needs to be performed, and then obtain the map reconstruction algorithm applicable to the scene category of the target scene. After receiving the scene collection data collected by the data collection device, the cloud platform may process the scene collection data by using the map reconstruction algorithm, to obtain the scene map corresponding to the target scene. In the solutions shown in this application, the server in the cloud platform executes the map reconstruction algorithm to generate the scene map. Compared with the conventional solution, this application can be used to perform the map reconstruction algorithm based on more powerful processing performance of the cloud platform, and improve map reconstruction accuracy. In addition, in the solutions shown in this application, the cloud platform may perform map reconstruction for the target scene based on the obtained scene category of the target scene by using the map reconstruction algorithm applicable to the scene category of the target scene. This can further improve map reconstruction accuracy.

In an example, the obtaining a scene category of the target scene includes: providing a configuration interface, where the configuration interface is configured to obtain the scene category, of the target scene, configured by a user.

In the solutions shown in this application, the cloud platform provides the configuration interface. The data collection device may upload the scene category of the target scene to the cloud platform through the configuration interface, so that the cloud platform obtains the scene category of the target scene, and performs map reconstruction for the target scene by using the map reconstruction algorithm applicable to the scene category. This improves map reconstruction accuracy in the target scene.

In an example, a map type of the scene map includes a point cloud map, a raster map, and/or a visual feature map.

In an example, the map reconstruction method further includes: delivering the point cloud map to a target device, so that the target device generates, based on the point cloud map, a simulation map corresponding to the target scene; or delivering the raster map or the visual feature map to the target device, so that the target device performs autonomous navigation in the target scene based on the raster map or the visual feature map.

In the solutions shown in this application, the cloud platform can support generation of scene maps of more map types, and may send scene maps of different map types to the target device based on a working requirement of the target device. This can improve reusability of sending the scene maps.

In an example, the map reconstruction method further includes: obtaining device information of the target device; converting, based on the device information of the target device; the scene map into a scene map having a target parameter; and delivering the scene map having the target parameter to the target device.

The device information includes a sensor parameter and a computing resource parameter, and the target parameter includes resolution and the map type. The target device may be a device that applies the scene map to work in the target scene. For example, the target scene is an industrial park, and the target device is a robot that performs delivering and obtaining in the industrial park. In the solutions shown in this application, the cloud platform may obtain the device information of the target device, and then convert, based on the device information, the scene map into the scene map applicable to working of the target device. This can improve reusability and flexibility of sending the scene map.

In an example, the map reconstruction method further includes: delivering a data processing module to the data collection device, where the data processing module is configured to preprocess data collected by the data collection device, and the scene collection data is data obtained through preprocessing by the data processing module.

In the solutions shown in this application, the cloud platform may send the data processing module to the the data collection device, so that the data collection device preprocesses the data collected by the data processing module. In this way, preprocessing of the collected data is disposed in the data collection device. This can fully use a processing capability of the data collection device, reduce occupation of processing resources of the cloud platform, and improve efficiency of generating the scene map by the cloud platform.

In an example, the scene category of the target scene includes at least one scene category, and the obtaining a map reconstruction algorithm corresponding to the scene category includes: determining, based on a correspondence between a scene category and a map reconstruction sub-algorithm, at least one map reconstruction sub-algorithm respectively corresponding to the at least one scene category; and generating, based on a map reconstruction primary algorithm and the at least one map reconstruction sub-algorithm, a map reconstruction algorithm matching the at least one scene category.

There may be one or more scene categories of the target scene. For example, if the target scene is an industrial park, the scene category of the target scene includes at least an outdoor scene, a large-scale scene, and the like. The map reconstruction primary algorithm is a map reconstruction algorithm, for map reconstruction, that can be independently used in various scene categories. The map reconstruction sub-algorithms corresponding to different scene categories may be algorithms for processing scene map reconstruction data based on features of the scene categories. For example, when the scene category of the target scene is a dynamic scene, a corresponding map reconstruction sub-algorithm is an algorithm for removing a moving object through filtering. It can be learned that in the solutions shown in this application, the map reconstruction algorithm applicable to the target scene can be generated based on the scene category of the target scene. This can improve accuracy of generating a scene map.

In an example, the map reconstruction method further includes: obtaining a collection mode of the data collection device, where the collection mode is a single-machine collection mode or a multi-machine collection mode; and the obtaining a map reconstruction algorithm corresponding to the scene category includes: generating a map reconstruction algorithm matching the collection mode and the scene category.

In the solutions shown in this application, the data collection device may have the single-machine collection mode or the multi-machine collection mode. The single-machine collection mode means that the scene collection data in the target scene is collected by one data collection device at one time. The multi-machine collection mode means that the scene collection data in the target scene is collected by multiple data collection devices, or collected by one data collection device at multiple times. In the solutions shown in this application, a map reconstruction algorithm applicable to a corresponding collection mode may be determined based on the collection mode of the data collection device. This can improve applicability of the map reconstruction method.

In an example, the scene category includes one or more of the following: an indoor scene, an outdoor scene, a large-scale scene, a small-scale scene, a sunny-day scene, a rainy-day scene, a cloudy-day scene, a foggy-day scene, a dusty scene, a dynamic scene, a static scene, a long corridor scene, a sparse feature scene, and a high refraction and high reflection scene.

According to a second aspect, this application provides a map reconstruction apparatus. The apparatus includes at least one module, and the at least one module is configured to implement the map reconstruction method according to any one of the first aspect or the examples of the first aspect.

According to a third aspect, this application provides a computing device cluster. The computing device cluster includes at least one computing device, and each computing device includes a processor and a memory. A processor in the at least one computing device is configured to execute instructions stored in a memory in the at least one computing device, so that the computing device cluster performs the map reconstruction method according to any one of the first aspect or the examples of the first aspect.

According to a fourth aspect, this application provides a computer-readable storage medium. The computer-readable storage medium includes computer program instructions, and when the computer program instructions are executed by a computing device cluster, the computing device cluster performs the map reconstruction method according to any one of the first aspect or the examples of the first aspect.

According to a fifth aspect, this application provides a computer program product including instructions. When the instructions are run by a computing device cluster, the computing device cluster is enabled to perform the map reconstruction method according to any one of the first aspect or the examples of the first aspect.

### BRIEF DESCRIPTION OF DRAWINGS

FIG. 1 is a flowchart of a map reconstruction method according to an embodiment of this application;
FIG. 2 is a diagram of a framework of a map reconstruction method according to an embodiment of this application;
FIG. 3 is a diagram of a structure of a map reconstruction apparatus according to an embodiment of this application;
FIG. 4 is a diagram of a computing device according to an embodiment of this application;
FIG. 5 is a diagram of a computing device cluster according to an embodiment of this application; and
FIG. 6 is a diagram of a computing device cluster according to an embodiment of this application.

### DESCRIPTION OF EMBODIMENTS

To make objectives, technical solutions, and advantages of this application clearer, the following further describes implementations of this application in detail with reference to accompanying drawings.

This application provides a map reconstruction solution. The map reconstruction method is applied to a cloud platform, and may be performed by a server in the cloud platform. The server in the cloud platform may receive map reconstruction data collected by a data collection device in a target scene, and then complete map reconstruction for the target scene based on the map reconstruction data.

The target scene is a map reconstruction scene where map reconstruction is required, like an industrial park, a park, or a shopping mall.

The data collection device is a device having a function of collecting map reconstruction data. The data collection device is equipped with a sensor, like a lidar, a camera, or an inertial measurement unit (Inertial Measurement Unit, IMU). The data collection device may be a robot, a mobile phone, a professional data collection device, or the like. When the data collection device is a professional data collection device, a sensor equipped on the data collection device has higher precision and higher performance compared with that on a device like a robot or a mobile phone. For example, a lidar has more lines, and a camera has more pixels. In addition, the data collection device may be equipped with either or both of the lidar and the camera.

The map reconstruction data is data that can be used to generate a scene map in the target scene after being processed by using a map reconstruction algorithm, and may include point cloud data and image data in the target scene, and pose data, odometer data, and the like in a process in which the data collection device collects the point cloud data and/or the image data in the target scene.

In the map reconstruction method provided in this application, the data collection device can collect the map reconstruction data in the target scene, and send the collected map reconstruction data to the server in the cloud platform, so that the server in the cloud platform performs map reconstruction for the target scene based on the map reconstruction data. This can deploy, by using a higher processing capability of the server, the map reconstruction algorithm capable of complex computing and with higher precision in the server, and improve accuracy of generating the scene map in the target scene.

In the map reconstruction method provided in this application, map reconstruction scenes may be classified into different scene categories. For example, map reconstruction scenes are classified into a large-scale map reconstruction scene and a small-scale map reconstruction scene based on a map reconstruction area in the map reconstruction scene, where the map reconstruction area may be a planar area in the map reconstruction scene. Alternatively, map reconstruction scenes may be classified into a sunny-day scene, a rainy-day scene, a cloudy-day scene, a foggy-day scene, a dusty scene, and the like based on weather corresponding to the map reconstruction scene. Alternatively, map reconstruction scenes may be classified into an indoor scene and an outdoor scene based on whether the map reconstruction scene is indoor or outdoor. Alternatively, map reconstruction scenes may be classified into a dynamic scene and a static scene based on whether there is a moving object (like a traveling vehicle or a pedestrian) in the map reconstruction scene. In addition, in this application, scene categories corresponding to some special map reconstruction scenes may be classified, for example, a long corridor scene, a sparse feature scene, and a high refraction and high reflection scene. The long corridor scene means that there is at least one corridor with a long distance in the map reconstruction scene, for example, a hotel corridor, a shopping mall corridor, or an office corridor. The sparse feature scene means that there are not many objects for feature matching in the map reconstruction scene, for example, an empty playground or a factory. In the high refraction and high reflection scene, a large quantity of high refraction or high reflection objects are present. For example, there are a large amount of glass or mirrors in the map reconstruction scene. One map reconstruction scene may belong to a plurality of scene categories. For example, one map reconstruction scene may be an outdoor large-scale sunny-day dynamic map reconstruction scene.

In this application, map reconstruction algorithms applicable to different scene categories may be stored in the server, and the server may perform map reconstruction for the target scene based on a map reconstruction algorithm corresponding to a scene category of the target scene. This can further improve accuracy of generating the scene map corresponding to the target scene.

With reference to the accompanying drawings, the following describes in detail the map reconstruction method provided in this application.

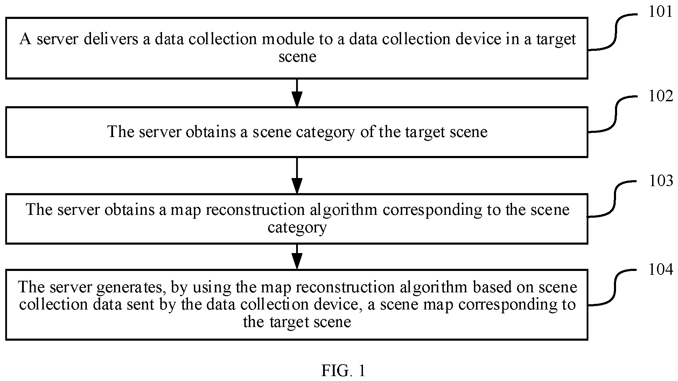

FIG. 1 is a flowchart of a map reconstruction method according to this application. The map reconstruction method may be performed by a server in a cloud platform. Refer to FIG. 1. The method includes the following steps.

Step 101: The server delivers a data collection module to a data collection device in a target scene.

In a possible case, the data collection module is a sensor driver corresponding to a sensor in the data collection device. For example, when the data collection device is equipped with a camera, the data collection module is a camera driver; and when the data collection device has a lidar, the data collection module is a lidar driver.

After receiving the data collection module sent by the server, the data collection device may install the data collection module. After the data collection module is installed, the data collection device may run the data collection module to start data collection in the target scene, so as to obtain scene collection data. The scene collection data is map reconstruction data in the target scene collected by the data collection device, and may be image data collected by a camera or point cloud data collected by a lidar.

The data collection device may move in the target scene to collect the map reconstruction data in the target scene. When moving in the target scene, the data collection device may send the collected map reconstruction data to the server.

In another possible case, a sensor driver is installed in the data collection device. For example, the sensor driver is preset in the data collection device upon delivery, or the server has sent the sensor driver to the data collection device before step 101 is performed. In this case, the data collection module delivered by the server may be a data collection notification. After receiving the data collection notification, the data collection device may start to collect scene collection data in the target scene. The data collection notification may further carry a data collection parameter, for example, a scanning frequency of a lidar or a photographing frequency of a camera. After receiving the data collection notification, the data collection device may indicate a sensor to collect the scene collection data based on the corresponding data collection parameter.

Step 102: The server obtains a scene category of the target scene.

There may be a plurality of scene categories to which the target scene belongs. For example, the scene category of the target scene is an outdoor scene, a sunny-day scene, a large-scale map reconstruction scene, a dynamic scene, or the like.

Before performing map reconstruction based on the scene collection data uploaded by the data collection device, the server may obtain the scene category of the target scene. The scene category of the target scene obtained by the server is sent by a user to the server via the data collection device.

Step 103: The server obtains a map reconstruction algorithm corresponding to the scene category.

The server may pre-store a correspondence between a scene category and a map reconstruction algorithm. In the correspondence, a map reconstruction algorithm corresponding to each scene category may be a map reconstruction algorithm adjusted based on a feature of the scene category, and can be used in the corresponding scene category. This improves map reconstruction accuracy. For example, an amount of data to be optimized at a time corresponding to a large-scale map reconstruction scene is greater than that in a small-scale map reconstruction scene. In map reconstruction algorithms corresponding to a rainy-day scene, a foggy-day scene, and a dusty scene, a reference weight of image data is low when a scene map is generated. Removing, through filtering, processing on a moving object is included in a map reconstruction algorithm corresponding to a dynamic scene. Removing, through filtering, processing on a semi-stationary object is included in a map reconstruction algorithm corresponding to a static scene, where the semi-stationary object may be a temporarily parked vehicle, a temporarily placed roadblock, or the like. Identification and removing, through filtering, processing on glass, and the like may be included in a map reconstruction algorithm corresponding to a high refraction and high reflection scene.

After obtaining the scene category of the target scene, the server may determine, based on the pre-stored correspondence, the map reconstruction algorithm corresponding to the scene category of the target scene.

Step 104: The server generates, by using the map reconstruction algorithm based on the scene collection data sent by the data collection device, a scene map corresponding to the target scene.

After determining the map reconstruction algorithm corresponding to the scene category of the target scene, the server may process, by using the map reconstruction algorithm, the scene collection data sent by the data collection device, to obtain the scene map corresponding to the target scene.

If the scene collection data includes both the point cloud data and the image data, the scene map generated by using the map reconstruction algorithm based on the scene collection data is a visual-point cloud map. If the scene collection data does not include the point cloud data, the scene map generated by using the map reconstruction algorithm based on the scene collection data is a visual feature map. If the scene collection data does not include the image data, the scene map generated based on the scene collection data by using the map reconstruction algorithm is a point cloud map. The visual-point cloud map is a scene map including both point cloud data and a visual feature, the visual feature map is a scene map including only a visual feature, and the point cloud map is a scene map including only point cloud data.

In embodiments of this application, the server in the cloud platform may obtain the scene category of the target scene, and determine the map reconstruction algorithm applicable to the target scene. Then, the server may process, by using the determined map reconstruction algorithm, the scene collection data sent by the data collection device, to generate the scene map corresponding to the target scene. It can be learned that, compared with a solution in which a scene map is generated by using a robot, this application in which processing of generating the scene map by using the map reconstruction algorithm is set in the server in the cloud platform can be used to perform the map reconstruction algorithm based on more powerful computing power of the server, and improve map reconstruction accuracy. In addition, the map reconstruction algorithm more applicable to the scene category of the target scene may be determined in the server, and map reconstruction is performed in the target scene. This can further improve map reconstruction accuracy.

It should be noted that, in a map reconstruction process, the data collection device needs to move in the target scene to collect the complete map reconstruction data in the target scene. If the data collection device is a mobile phone or a professional data collection device, a worker can hold the data collection device with hand and move in the target scene. If the data collection device is a robot, in addition to sending the collected map reconstruction data to the server by the robot, the robot may further perform navigation based on the collected map reconstruction data, or the server may control, based on the map reconstruction data sent by the robot, the robot to move in the target scenes.

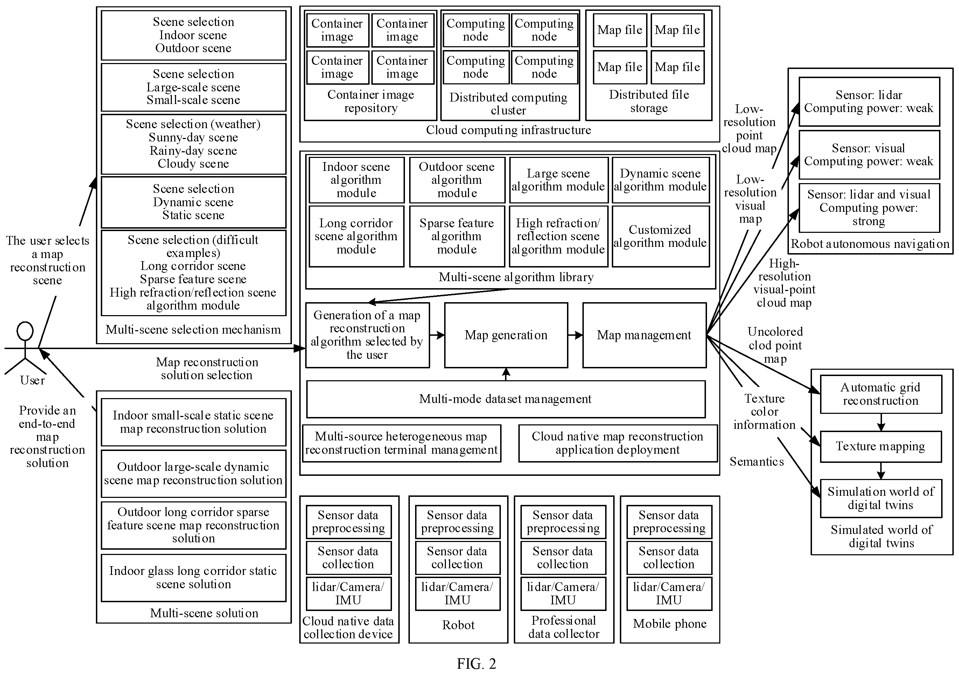

The map reconstruction method provided in this application is applied to the cloud platform, and can implement an automatic cloud map reconstruction solution applicable to a plurality of map reconstruction scenes. FIG. 2 is a diagram of a framework of a map reconstruction method according to this application. Refer to FIG. 2, to implement the map reconstruction method, a cloud platform provides a container image repository, a distributed computing cluster including a plurality of computing nodes, and a distributed file storage system, and provides modules such as multi-source heterogeneous map reconstruction terminal management, cloud map reconstruction application deployment, multi-modal dataset management, a multi-scene algorithm library, map reconstruction solution generation, map generation, and map management. The following describes the foregoing modules with reference to FIG. 1 and FIG. 2.
1. Multi-source heterogeneous map reconstruction terminal management module

A multi-source heterogeneous map reconstruction terminal management module, referred to as a device management module for short, and may provide a channel for bidirectional communication between the data collection device and the cloud platform, and implement functions such as registration of the data collection device on the cloud platform and verification of the data collection device. The device management module may also be referred to as the multi-source heterogeneous map reconstruction terminal management module.

The device management module may provide a registration interface for the data collection device. The data collection device may send corresponding device information to the device management module and complete registration of the data collection device on the server, for example, send a device name and a device type (such as a robot, a mobile phone, or a professional data collector) of the data collection device to the device management module. The device management module may transfer the device name and the device type of the data collection device to the registration interface. The registration interface may allocate a unique device identifier (Device ID) to the data collection device.

The device management module has an authentication function. After allocating the Device ID to the data collection device, the device management module may transfer the Device ID of the data collection device to the registration interface, and the registration interface may generate a device certificate based on the transferred Device ID and the data collection device corresponding to the Device ID. The device certificate is for bidirectional authentication between the data collection device and the cloud platform.

In a possible case, before the server performs, on the data collection device, a map reconstruction method procedure corresponding to the foregoing steps 101 to 104, the data collection device may first complete registration and authentication of the data collection device via the device management module. The data collection device may be a robot, a professional data collection device, a mobile phone, or the like.

In another possible case, a device certificate may be preset in the data collection device. The device certificate may be preset in the data collection device upon delivery of the data collection device, or may be previously sent by the server. For the data collection device with the preset device certificate, before the server performs, on the data collection device, the map reconstruction method corresponding to the foregoing steps 101 to 104, the data collection device completes authentication with the server based on the preset device certificate.

The device information, of the data collection device, obtained by the device management module through the registration interface may further include a sensor parameter and a computing resource parameter. The sensor parameter may include a lidar parameter, a camera parameter, an IMU parameter, and the like. The lidar parameter may include a lidar type (for example, a solid-state lidar or a multi-line rotating lidar), a quantity of lidar lines, a lidar vendor, a lidar data type, and the like. The camera parameter may include a camera type (for example, an RGB camera or an RGBD camera), a camera pixel, a camera vendor, and a camera data type (for example, png or jpg). The IMU parameter includes an IMU type (for example, a six-axis IMU and a nine-axis IMU), an IMU vendor, an IMU data type, and the like. The computing resource parameter may be a parameter of a central processing unit (central processing unit, CPU) in the data collection device (such as an amount of data in a memory in the CPU, a quantity of cores, and an operating frequency), a parameter of a graphics processing unit (graphics processing unit, GPU) (such as a quantity of GPUs and an operating frequency), or the like.

### 2. Cloud map reconstruction application deployment module

A cloud map reconstruction application deployment module packages map reconstruction applications, such as the data collection module and a data preprocessing module, in a standard image format to implement management, update, delivery, and deployment of the map reconstruction applications.
(1) The data collection module is the data collection module in step 101. The data collection module may include a laser data collection module, a visual data collection module, an inertial measurement unit (Inertial Measurement Unit, IMU) data collection module, an odometer data collection module, and the like.

The laser data collection module is a lidar driver corresponding to a lidar, and may be configured to drive the lidar on the data collection device to collect point cloud data in the map reconstruction scene. The visual data collection module is a camera driver corresponding to a camera, and may be configured to drive the camera on the data collection device to collect image data in the map reconstruction scene. The IMU data collection module is an IMU driver, and may be configured to drive the IMU on the data collection device to collect pose data of the data collection device. The odometer data collection module is configured to perform computing on the data collected by the IMU data collection module to obtain movement trajectory data of the data collection device (for example, the robot) in the target scene.

An application deployment interface may be provided in the cloud map reconstruction application deployment module. Before the server performs step 101 on a data collection device, the server may obtain the sensor parameter uploaded by the data collection device to the device management module, for example, the quantity of lidar lines, a pixel of a camera, and a quantity of axes of the IMU. The server may transfer the obtained sensor parameter to the application deployment interface. The application deployment interface may determine, based on the transferred sensor parameter, the data collection module adapted to the data collection device, and may send the determined data collection module to the data collection device.

(2) The data preprocessing module is a module configured to preprocess the data collected by the data collection module. For example, a data feature (for example, a plane feature or a curved surface feature) in the point cloud data collected by the liar is extracted. For another example, a data feature (for example, a feature point or a photometric value) in the image data collected by the camera is extracted.

The application deployment interface provided by the cloud map reconstruction application deployment module may determine, based on the sensor parameter from the data collection device, the data preprocessing module matching the sensor parameter from the data collection device, and then send the data preprocessing module to the data collection device. If the data collection device includes only the liar, the determined data preprocessing module may preprocess the point cloud data.

The data collection device may preprocess, based on the data preprocessing module, the data collected by the data collection module. Then, preprocessed data may be sent to the server, so that the server performs processing in step 104 of generating, by using the map reconstruction algorithm based on the scene collection data sent by the data collection device, the scene map corresponding to the target scene. The scene collection data sent by the data collection device is the preprocessed data.

Because preprocessing the data collected by the data collection device has a low requirement on performance of a processor, the preprocessing performed on the data collected by the data collection device may be set in the data collection device in this application. This can fully use a processing capability of the data collection device, avoid a waste of the processing capability of the data collection device in the cloud map reconstruction solution, reduce occupation of a processing resource of the cloud platform, and improve efficiency of generating the scene map by the cloud platform to some extent.

Both the data collection module and the data preprocessing module may be set to a standard container image format, and are stored in a container image repository of the cloud platform.

This application further provides a cloud native data collection device. In the cloud native data collection device, a device certificate may be preset, and a data collection module and a data preprocessing module are installed. The cloud native data collection device may be a combination of a mobile robot and a professional data collection device. In this case, the cloud map reconstruction application deployment module does not need to deploy the data collection module and the data preprocessing module in the cloud native data collection device. The cloud map reconstruction application deployment module may directly obtain the scene collection data based on pre-installed data collection module and data preprocessing module, and send the scene collection data to the server, so that the server performs step 101 to step 104.

### 3. Multi-modal dataset management module

A multi-modal dataset management module, referred to as a data management module for short, is configured to receive the scene collection data uploaded by the data collection device. The scene collection data may be a multi-mode dataset, that is, including data collected by a plurality of sensors or data obtained after preprocessing is performed on data collected by a plurality of sensors. The data management module may store the scene collection data uploaded by the data collection device in the distributed file storage system provided by the cloud platform.

The data management module may provide a data download interface externally, and another module may download, through the data download interface, the scene collection data uploaded by the data collection device.

### 4. Multi-scene algorithm library

The multi-scene algorithm library stores a map reconstruction primary algorithm and map reconstruction sub-algorithms corresponding to different scene categories. The map reconstruction primary algorithm is an algorithm that can be used to implement map reconstruction in map reconstruction scenes of various scene categories. The map reconstruction sub-algorithm is an algorithm used to optimize data in a process of performing map reconstruction by using the map reconstruction primary algorithm based on the scene categories corresponding to the map reconstruction scenes of different scene categories. For example, in a map reconstruction scene in which a scene category is a dynamic scene, a corresponding map reconstruction sub-algorithm is an algorithm for removing a moving object in the map reconstruction scene through filtering. In a map reconstruction scene in which a scene category is a static scene, a corresponding map reconstruction sub-algorithm is an algorithm for removing a semi-stationary object in the map reconstruction scene through filtering. In a map reconstruction scene in which a scene category is a high refraction and high reflection scene, a corresponding map reconstruction sub-algorithm is an algorithm for identifying glass in a target scene and removing the glass through filtering. The map reconstruction primary algorithm and each map reconstruction sub-algorithm are decoupled from each other, are packaged into a standard container image format, and are stored in the container image repository provided by the cloud platform.

The multi-scene algorithm library further stores a sub-algorithm corresponding to a multi-machine collection mode. The multi-machine collection mode means that the scene collection data in the target scene is collected by multiple data collection devices, or collected by one data collection device at multiple times. The sub-algorithm is an algorithm for splicing maps generated by multiple data collection devices by using the primary algorithm.

The multi-scene algorithm library may further store algorithms for converting scene maps into different types of scene maps, for example, an algorithm for converting a visual-point cloud map into a point cloud map or a visual feature map, an algorithm for converting a high-resolution scene map into a low-resolution scene map occupying less memory, or an algorithm for converting a point cloud map into a raster map.

### 5. Map reconstruction solution generation module

A map reconstruction solution generation module may determine a map reconstruction solution applicable to a current map reconstruction scene. The map reconstruction solution includes a map reconstruction algorithm applicable to the current map reconstruction scene, a computing resource required by the map reconstruction solution, and the like. Processing of obtaining, by the server, the map reconstruction algorithm corresponding to the scene category in step 103 may be implemented by the map reconstruction solution generation module.

In a possible case, the map reconstruction solution generation module provides a configuration interface, and the configuration interface is configured to obtain the scene category, of the target scene, configured by the user.

As shown in FIG. 2, the cloud platform provides a multi-scene selection mechanism, and the data collection device may send, to the map reconstruction solution generation module through the configuration interface, a scene category for selection. For example, the data collection device may include a display (for example, a mobile phone or a robot having a display). The cloud platform may provide a map reconstruction scene selection interface for the data collection device. The user may select or input, in the map reconstruction scene selection interface, the scene category of the map reconstruction scene in which map reconstruction is required, and then send the scene category to the configuration interface in the map reconstruction solution generation module via the data collection device, so that the map reconstruction solution generation module obtains the scene category of the target scene.

Still refer to FIG. 2. The map reconstruction solution generation module may determine the corresponding map reconstruction solution based on the obtained scene category of the target scene. The map reconstruction solution includes the map reconstruction algorithm applicable to the current map reconstruction scene, the computing resource required by the map reconstruction solution, and the like. For example, based on different scene categories of the target scene, an indoor small-scale static scene map reconstruction solution corresponding to an indoor scene, a small-scale scene, and a static scene; an outdoor large-scale dynamic scene map reconstruction solution corresponding to an outdoor scene, a large-scale scene, and a dynamic scene; an outdoor long corridor sparse feature scene map reconstruction solution corresponding to an outdoor scene, a long corridor scene, and a sparse feature scene; an indoor glass (high refraction) long corridor scene map reconstruction solution corresponding to an indoor scene, a glass (high refraction) scene, and a long corridor scene; and the like are generated. After generating the map reconstruction solution, the map reconstruction solution generation module may further send the generated map reconstruction solution to the user for confirmation.

The map reconstruction algorithm applicable to the current map reconstruction scene includes the map reconstruction primary algorithm and the map reconstruction sub-algorithm that is determined by the user and that corresponds to the current map reconstruction scene. The map reconstruction solution generation module may store a correspondence between a scene category and a map reconstruction sub-algorithm. After obtaining the scene category of the target scene, the map reconstruction solution generation module may determine, based on the correspondence, a map reconstruction sub-algorithm corresponding to at least one scene category of the target scene, and then form, by using the map reconstruction primary algorithm and at least one map reconstruction sub-algorithm, the map reconstruction algorithm applicable to the target scene. In addition, the map reconstruction solution generation module may further determine, based on a collection mode of the data collection device, the map reconstruction algorithm applicable to the target scene.

Processing in step 103 may further include generating a map reconstruction algorithm matching the collection mode and the scene category. The user may send, via the data collection device, the collection mode of the data collection device to the map reconstruction solution generation module, and then the map reconstruction solution generation module generates the map reconstruction algorithm matching the collection mode and the scene category of the target scene.

The collection mode includes the single-machine collection mode and the multi-machine collection mode. When the collection mode of the data collection device is the multi-machine collection mode, a sub-algorithm corresponding to the multi-machine collection mode may be obtained from the multi-scene algorithm library, and then the determined sub-algorithm and the map reconstruction algorithm corresponding to the scene category of the target scene form the map reconstruction algorithm for reconstructing the map in the target scene. When the collection mode of the data collection device is the single-machine collection mode, the map reconstruction solution generation module may generate only the map reconstruction algorithm matching the scene category of the target scene.

### 6. Map generation module

A map generation module may obtain, from the multi-scene algorithm library based on the map reconstruction algorithm determined in the map reconstruction solution generation module, the corresponding map reconstruction primary algorithm and the corresponding map reconstruction sub-algorithm, and form the map reconstruction algorithm. Then, the scene collection data uploaded by the data collection device may be obtained from the data management module, and the obtained scene collection data is processed by using the map reconstruction algorithm generated by a map reconstruction algorithm obtaining module, to obtain the scene map corresponding to the target scene. That is, the map generation module may be configured to implement processing in the foregoing step 104 that the server generates, by using the map reconstruction algorithm based on the scene collection data sent by the data collection device a, the scene map corresponding to the target scene.

If the scene collection data uploaded by the data collection device does not include point cloud data of the target scene, the map generation module may process the scene collection data by using the map reconstruction algorithm generated by the map reconstruction solution generation module, to obtain a visual feature map corresponding to the target scene. If the scene collection data uploaded by the data collection device does not include image data of the target scene, the map generation module may process the scene collection data by using the map reconstruction algorithm generated by the map reconstruction solution generation module, to obtain a point cloud map corresponding to the target scene. If the data management module obtains, from the data management module, that the scene collection data uploaded by the data collection device includes both image data and point cloud data, the map generation module may process the scene collection data by using the map reconstruction algorithm generated by the map reconstruction solution generation module, to obtain a visual-point cloud map corresponding to the target scene. In addition, in the map generation module, a conversion algorithm may be obtained from the multi-scene algorithm library, to convert a point cloud map generated for the target scene into a raster map.

### 7. Map management module

A map management module is configured to send, to a target device, different types of maps, corresponding to the target scene, generated by the map generation module.

In a possible case, the map generation module may be configured to convert, based on device information of the target device, the scene map into a scene map having a target parameter.

The target device may be a device that applies the scene map to work in the target scene. For example, if the target scene is an industrial park, the corresponding target device may be a small vehicle that delivers goods in the industrial park. For another example, if the target scene is a shopping mall, the corresponding target device may be an intelligent question-answering robot in the shopping mall. In addition, the target device and the data collection device may be a same device, that is, the target device has both a data collection capability (for example, a component equipped with a lidar, a camera, an IMU, and the like) and a working capability (for example, navigation in the target scene based on the scene map). The target device and the data collection device may be a same device, that is, the target device completes a data collection function when performing map reconstruction for the target scene, and may also work in the target scene based on the scene map corresponding to the target scene.

The device information of the target device includes a sensor parameter and a computing resource parameter. The sensor parameter of the target device may include a lidar parameter, a camera parameter, an IMU parameter, and the like. The computing resource parameter of the target device may include a CPU parameter of the target device and the like. The device information of the target device may be obtained by the device management module. The target parameter includes resolution and a map type. The map type may include the point cloud map, the visual point map, the visual-point cloud map, the raster map, and the like.

The map management module may obtain the device information of the target device via the device management module, and convert the scene map generated for the target scene into a scene map applicable to the target device working in the target scene. For example, the map management module may determine a map type of the converted scene map based on a sensor type of the target device. If no lidar is configured for the target device, the map type of the converted scene map may be a visual feature map. For example, if CPU performance of the target device is low, resolution of the converted scene map may be low. Further, the map management module may be divided into a multi-modal map generation module, a multi-resolution map generation module, a map distribution module, and a visual-assisted point cloud semantic marking module.

The multi-modal map generation module is configured to convert, if the scene map generated by the map generation module for the target scene is a multi-modal map, the scene map into maps of multiple different modes in the multi-modal map generation module. For example, if the scene map is a visual-point cloud map, the multi-modal map generation module may convert the visual-point cloud map into a point cloud map or a visual feature map.

The multi-resolution map generation module may convert the scene map generated by the map generation module or the multi-modal map generation module into maps of multiple different resolutions. A map with lower resolution corresponds to a smaller data amount.

The point cloud semantic marking module is configured to perform semantic identification on the generated visual feature map, and mark the generated point cloud map based on a semantic identification result, to obtain marking information of the point cloud map. This can input the point cloud map of the target scene, the image data collected for the target scene, and the marking information into a simulation world map generation algorithm, to obtain a simulation world map corresponding to the map reconstruction scene. The simulation world map is a map for simulating the data collection device.

Refer to FIG. 2, when the target device needs to perform autonomous navigation based on the scene map corresponding to the target scene, the map management module sends, to the target device, the raster map or the visual feature map generated by the map generation module; or sends, to the target device, the scene map corresponding to the target scene based on the sensor parameter and the computing resource parameters of the target device.

For example, when the target device is equipped with only a lidar and has weak computing power, the map management module may send, to the target device, a low-resolution point cloud map or raster map generated by the map generation module; or when the target device is equipped with only a camera and has weak computing power, the map management module may send, to the target device, a low-resolution visual feature map (namely, a visual feature map with sparse visual features) generated by the map generation module; or when the target device is equipped with a liar and a camera and has strong computing power, the map management module may send, to the target device, a high-resolution visual-point cloud map generated by the map generation module. This can send maps having target parameters to target devices based on sensors of different target devices. This can improve reusability of the scene map.

Still refer to FIG. 2. When the target device needs to generate the simulation world map based on the scene map corresponding to the target scene, the map management module may send, based on the target device, an uncolored point cloud map corresponding to the target scene, and texture color information and semantic information corresponding to the scene map.

The uncolored point cloud map is the point cloud map generated for the target scene, the texture color information corresponding to the scene map is the image data of the target scene collected by the camera, and the semantic information is semantic information obtained by the point cloud semantic marking module by performing semantic identification on the visual feature map corresponding to the target scene. After receiving the uncolored point cloud map and the texture color information and semantic information corresponding to the scene map, the target device may perform automatic grid reconstruction on the uncolored point cloud map, to obtain a reconstructed map model, then perform texture mapping on the map model based on the texture color information, to obtain a mapped map model, and then mark the mapped map model based on the semantic information, to generate the simulation world map for simulation processing on the target device (for example, a robot). This generates, based on the cloud map corresponding to the target scene, the simulation world map for simulating the target device, prevents a technical person from manually constructing the simulation world map for simulating the target device, and can improve efficiency of obtaining the simulation world map.

All of the foregoing optional technical solutions may form optional embodiments of this disclosure through any combination. Details are not described herein again.

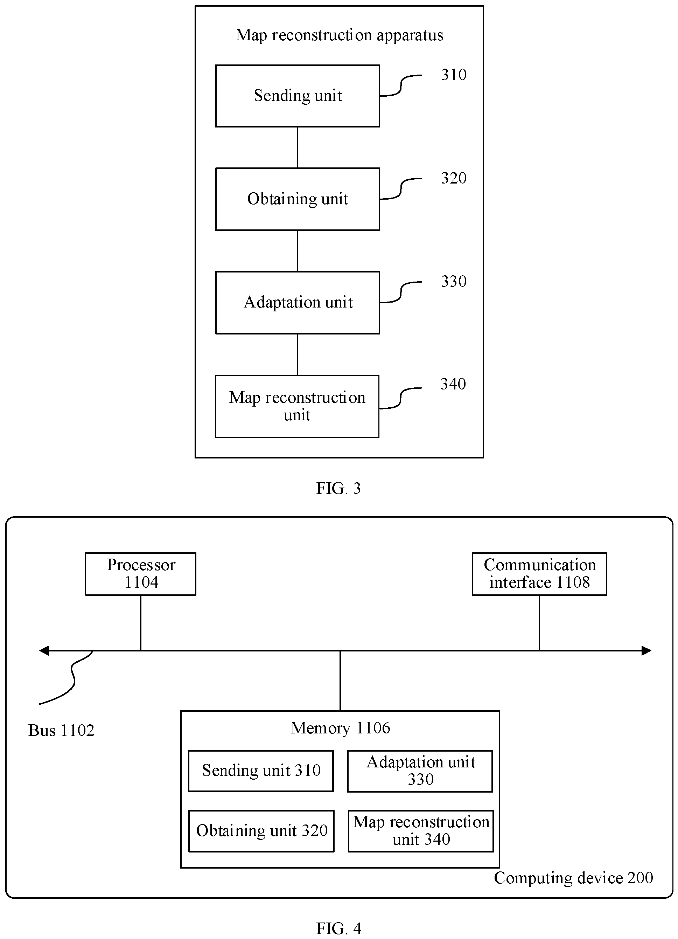

FIG. 3 is a diagram of a structure of a map reconstruction apparatus according to an embodiment of this application. The apparatus may be implemented as a part of the apparatus or an entire apparatus by using software, hardware, or a combination thereof. The apparatus provided in this embodiment of this application may implement a procedure shown in FIG. 1 in embodiments of this application. The apparatus includes a sending unit 310, an obtaining unit 320, an adaptation unit 330, and a map reconstruction unit 340.

The sending unit 310 is configured to deliver a data collection module to a data collection device in a target scene, so that the data collection device collects scene collection data in the target scene. Specifically, a sending function in step 101 and another implicit step may be implemented.

The obtaining unit 320 is configured to obtain a scene category of the target scene. Specifically, a sending function in step 102 and another implicit step may be implemented.

The adaptation unit 330 is configured to obtain a map reconstruction algorithm corresponding to the scene category. Specifically, an adaptation function in step 103 may be implemented.

The map reconstruction unit 340 is configured to generate, by using the map reconstruction algorithm based on the scene collection data sent by the data collection device, a scene map corresponding to the target scene. Specifically, an adaptation function in step 104 and another implicit step may be implemented.

In an example, the obtaining unit 320 is configured to:
provide a configuration interface, where the configuration interface is configured to obtain the scene category, of the target scene, configured by a user.

In an example, a map type of the scene map includes a point cloud map, a raster map, and/or a visual feature map.

In an example, the sending unit 310 is further configured to:
deliver the point cloud map to a target device, so that the target device generates, based on the point cloud map, a simulation map corresponding to the target scene; or deliver the raster map or the visual feature map to the target device, so that the target device performs autonomous navigation in the target scene based on the raster map or the visual feature map.

In an example, the obtaining unit 320 is further configured to obtain device information of the target device.

The apparatus further includes a conversion unit, configured to convert, based on the device information of the target device, the scene map into a scene map having a target parameter.

The sending unit 310 is further configured to deliver the scene map having the target parameter to the target device.

In an example, the device information includes a sensor parameter and a computing resource parameter, and the target parameter includes resolution and the map type.

In an example, the sending unit 310 is further configured to:
deliver a data processing module to the data collection device, where the data processing module is configured to preprocess data collected by the data collection device, and the scene collection data is data obtained through preprocessing by the data processing module.

In an example, the scene category of the target scene includes at least one scene category, and the adaptation unit 330 is configured to:
determine, based on a correspondence between a scene category and a map reconstruction sub-algorithm, at least one map reconstruction sub-algorithm respectively corresponding to the at least one scene category; and
generate, based on a map reconstruction primary algorithm and the at least one map reconstruction sub-algorithm, a map reconstruction algorithm matching the at least one scene category.

In an example, the obtaining unit 320 is further configured to obtain a collection mode of the data collection device, where the collection mode is a single-machine collection mode or a multi-machine collection mode; and the adaptation unit 330 is configured to generate a map reconstruction algorithm matching the collection mode and the scene category.

In an example, the scene category includes one or more of the following: an indoor scene, an outdoor scene, a large-scale scene, a small-scale scene, a sunny-day scene, a rainy-day scene, a cloudy-day scene, a foggy-day scene, a dusty scene, a dynamic scene, a static scene, a long corridor scene, a sparse feature scene, and a high refraction and high reflection scene.

The sending unit 310, the obtaining unit 320, the adaptation unit 330, and the map reconstruction unit 340 may all be implemented by using software, or may be implemented by using hardware. For example, the following uses the map reconstruction unit 340 as an example to describe an implementation of the map reconstruction unit 340. Similarly, for implementations of the sending unit 310, the obtaining unit 320, and the adaptation unit 330, refer to the implementation of the map reconstruction unit 340.

A unit is used as an example of a software functional unit, and the map reconstruction unit 340 may include code running on a computing instance. The computing instance may include at least one of a physical host (computing device), a virtual machine, and a container. Further, there may be one or more computing instances. For example, the map reconstruction unit 340 may include code running on a plurality of hosts/virtual machines/containers. It should be noted that the plurality of hosts/virtual machines/containers for running the code may be distributed in a same region (region), or may be distributed in different regions. Further, the plurality of hosts/virtual machines/containers for running the code may be distributed in a same availability zone (availability zone, AZ), or may be distributed in different AZs. Each AZ includes one data center or a plurality of data centers geographically close to each other. Generally, one region may include a plurality of AZs.

Similarly, the plurality of hosts/virtual machines/containers for running the code may be distributed in a same virtual private cloud (virtual private cloud, VPC), or may be distributed in a plurality of VPCs. Generally, one VPC is set in one region. A communication gateway needs to be set in each VPC for cross-region communication between two VPCs in a same region or between VPCs in different regions. Interconnection between VPCs is implemented through the communication gateway.

A unit is used as an example of a hardware functional unit, and the map reconstruction unit 340 may include at least one computing device, like a server. Alternatively, the map reconstruction unit 340 may be a device implemented through an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

A plurality of computing devices included in the map reconstruction unit 340 may be distributed in a same region, or may be distributed in different regions. The plurality of computing devices included in the map reconstruction unit 340 may be distributed in a same AZ, or may be distributed in different AZs. Similarly, a plurality of computing devices included in each of the sending unit 310, the obtaining unit 320, and the adaptation unit 330 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the map reconstruction unit 340 may be configured to perform any step in the map reconstruction method, and the sending unit 310, the obtaining unit 320, and the adaptation unit 330 may also be configured to perform any step in the map reconstruction method. Steps that are implemented by the sending unit 310, the obtaining unit 320, the adaptation unit 330, and the map reconstruction unit 340 may be specified as required. The sending unit 310, the obtaining unit 320, the adaptation unit 330, and the map reconstruction unit 340 separately implement different steps in the map reconstruction method, to implement all functions of the map reconstruction apparatus.

It should be further noted that, in embodiments of this application, division into the units is an example, and is merely a logical function division. In actual implementation, another division manner may be used.

FIG. 4 is a diagram of a structure of a computing device 200 according to an embodiment of this application. As shown in FIG. 4, the computing device 200 includes a bus 1102, a processor 1104, a memory 1106, and a communication interface 1108. The processor 1104, the memory 1106, and the communication interface 1108 communicate with each other through the bus 1102. The computing device 200 may be a server or a terminal device. It should be understood that quantities of processors and memories in the computing device 200 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 4, but this does not mean that there is only one bus or only one type of bus. The bus 1102 may include a path for transmitting information between components (for example, the memory 1106, the processor 1104, and the communication interface 1108) of the computing device 200.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The memory 1106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1106 stores executable program code, and the processor 1104 executes the executable program code to separately implement functions of the sending unit 310, the obtaining unit 320, the adaptation unit 330, and the map reconstruction unit 340, so as to implement the map reconstruction method. In other words, the memory 1106 stores instructions for performing the map reconstruction method.

The communication interface 1108 uses a transceiver module, for example, but not limited to, a network interface card or a transceiver, to implement communication between the computing device 200 and another device or a communication network.

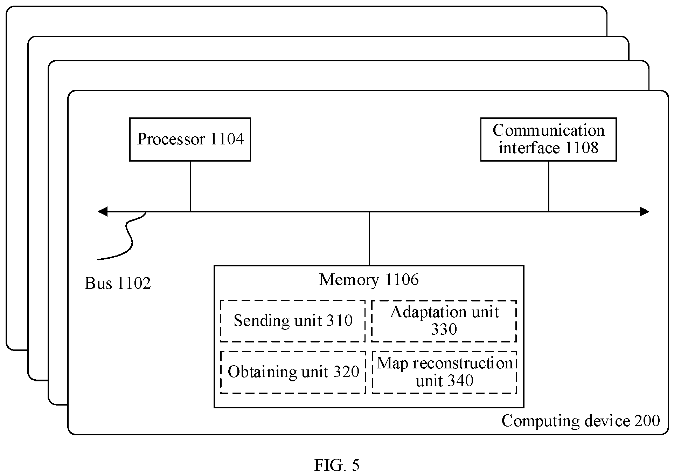

FIG. 5 is a diagram of a computing device cluster according to an embodiment of this application. The computing device cluster includes at least one computing device. The computing device may be a server, for example, the computing device is a central server, an edge server, or a local server in a local data center. In some embodiments, the computing device may alternatively be a terminal device, for example, a desktop computer, a notebook computer, or a smartphone.

As shown in FIG. 5, the computing device cluster includes at least one computing device 200. A memory 1106 in one or more computing devices 200 in the computing device cluster may store same instructions for performing a map reconstruction method.

In some possible implementations, the memory 1106 in the one or more computing devices 200 in the computing device cluster may also separately store some instructions for performing the map reconstruction method. In other words, a combination of the one or more computing devices 200 may jointly execute instructions for performing the map reconstruction method.

It should be noted that memories 1106 in different computing devices 200 in the computing device cluster may store different instructions respectively for performing some functions of the foregoing map reconstruction apparatus. In other words, instructions stored in the memories 1106 in different computing devices 200 may implement functions of one or more of the sending unit 310, the obtaining unit 320, the adaptation unit 330, and the map reconstruction unit 340.

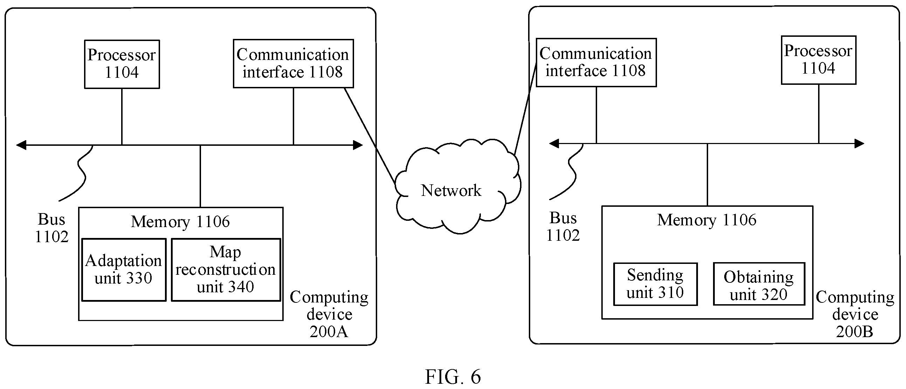

In some possible implementations, the one or more computing devices in the computing device cluster may be connected through a network. The network may be a wide area network, a local area network, or the like. FIG. 6 shows a possible implementation. As shown in FIG. 6, two computing devices (a first computing device 200A and a second computing device 200B) are connected through a network. Specifically, each computing device is connected to the network through a communication interface in the computing device. In this possible implementation, a memory 1106 in the first computing device 200A stores instructions for performing functions of the sending unit 310. In addition, a memory 1106 in the second computing device 200B stores instructions for performing functions of the obtaining unit 320, the adaptation unit 330, and the map reconstruction unit 340.

A connection manner between the computing device clusters shown in FIG. 6 may be based on a consideration that data transmission exists between the sending unit 310, the obtaining unit 320, the adaptation unit 330, and the map reconstruction unit 340 in the map reconstruction method provided in this application, and that the adaptation unit 330 and the map reconstruction unit 340 occupy large space. Therefore, it is considered that execution of functions implemented by the adaptation unit 330 and the map reconstruction unit 340 is delivered to the first computing device 200A for execution. Further, it is considered that the map reconstruction method provided in this application may interact with a terminal device. Therefore, it is considered that execution of functions implemented by the sending unit 310 and the obtaining unit 320 is delivered to the second computing device 200B for execution.

It should be understood that functions of the first computing device 200A shown in FIG. 6 may also be completed by a plurality of computing devices 200. Similarly, functions of the second computing device 200B may also be completed by the plurality of computing devices 200.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the map reconstruction method provided in the foregoing embodiment.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a digital multi-functional disc (digital video disc, DVD)), a semiconductor medium (for example, a solid-state drive), or the like. The computer-readable storage medium includes instructions, and the instructions instruct a computing device to perform the map reconstruction method provided in the foregoing embodiment.

Persons of ordinary skill in the art may be aware that, in combination with the examples described in embodiments disclosed in this application, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of this application.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in embodiments of this application.

## Claims

1. A map reconstruction method, wherein the method comprises:
delivering a data collection module to a data collection device in a target scene, so that the data collection device collects scene collection data in the target scene;
obtaining a scene category of the target scene;
obtaining a map reconstruction algorithm corresponding to the scene category; and
generating, by using the map reconstruction algorithm based on the scene collection data sent by the data collection device, a scene map corresponding to the target scene.

2. The method according to claim 1, wherein the obtaining a scene category of the target scene comprises:
providing a configuration interface, wherein the configuration interface is configured to obtain the scene category, of the target scene, configured by a user.

3. The method according to claim 1 or 2, wherein a map type of the scene map comprises a point cloud map, a raster map, and/or a visual feature map.

4. The method according to claim 3, wherein the method further comprises:
delivering the point cloud map to a target device, so that the target device generates, based on the point cloud map, a simulation map corresponding to the target scene; or
delivering the raster map or the visual feature map to the target device, so that the target device performs autonomous navigation in the target scene based on the raster map or the visual feature map.

5. The method according to any one of claims 1 to 4, wherein the method further comprises:
obtaining device information of the target device;
converting, based on the device information of the target device, the scene map into a scene map having a target parameter; and
delivering the scene map having the target parameter to the target device.

6. The method according to claim 5, wherein the device information comprises a sensor parameter and a computing resource parameter, and the target parameter comprises resolution and the map type.

7. The method according to any one of claims 1 to 6, wherein the method further comprises:
delivering a data processing module to the data collection device, wherein the data processing module is configured to preprocess data collected by the data collection device, and
the scene collection data is data obtained through preprocessing by the data processing module.

8. The method according to any one of claims 1 to 7, wherein the scene category of the target scene comprises at least one scene category, and the obtaining a map reconstruction algorithm corresponding to the scene category comprises:
determining, based on a correspondence between a scene category and a map reconstruction sub-algorithm, at least one map reconstruction sub-algorithm respectively corresponding to the at least one scene category; and
generating, based on a map reconstruction primary algorithm and the at least one map reconstruction sub-algorithm, a map reconstruction algorithm matching the at least one scene category.

9. The method according to any one of claims 1 to 8, wherein the method further comprises:
obtaining a collection mode of the data collection device, wherein the collection mode is a single-machine collection mode or a multi-machine collection mode; and
the obtaining a map reconstruction algorithm corresponding to the scene category comprises:
generating a map reconstruction algorithm matching the collection mode and the scene category.

10. The method according to any one of claims 1 to 9, wherein the scene category comprises one or more of the following:
an indoor scene, an outdoor scene, a large-scale scene, a small-scale scene, a sunny-day scene, a rainy-day scene, a cloudy-day scene, a foggy-day scene, a dusty scene, a dynamic scene, a static scene, a long corridor scene, a sparse feature scene, and a high refraction and high reflection scene.

11. A map reconstruction apparatus, wherein the apparatus comprises:
a sending unit, configured to deliver a data collection module to a data collection device in a target scene, so that the data collection device collects scene collection data in the target scene;
an obtaining unit, configured to obtain a scene category of the target scene;
an adaptation unit, configured to obtain a map reconstruction algorithm corresponding to the scene category; and
a map reconstruction unit, configured to generate, by using the map reconstruction algorithm based on the scene collection data sent by the data collection device, a scene map corresponding to the target scene.

12. The apparatus according to claim 11, wherein the obtaining unit is configured to:
provide a configuration interface, wherein the configuration interface is configured to obtain the scene category, of the target scene, configured by a user.

13. The apparatus according to claim 11 or 12, wherein a map type of the scene map comprises a point cloud map, a raster map, and/or a visual feature map.

14. The apparatus according to claim 13, wherein the sending unit is further configured to:
deliver the point cloud map to a target device, so that the target device generates, based on the point cloud map, a simulation map corresponding to the target scene; or
deliver the raster map or the visual feature map to the target device, so that the target device performs autonomous navigation in the target scene based on the raster map or the visual feature map.

15. The apparatus according to any one of claims 11 to 14, wherein the obtaining unit is further configured to obtain device information of the target device;
the apparatus further comprises a conversion unit, configured to convert, based on the device information of the target device, the scene map into a scene map having a target parameter; and
the sending unit is further configured to deliver the scene map having the target parameter to the target device.

16. The apparatus according to claim 15, wherein the device information comprises a sensor parameter and a computing resource parameter, and the target parameter comprises resolution and the map type.

17. The apparatus according to any one of claims 11 to 16, wherein the sending unit is further configured to:
deliver a data processing module to the data collection device, wherein the data processing module is configured to preprocess data collected by the data collection device, and
the scene collection data is data obtained through preprocessing by the data processing module.

18. The apparatus according to any one of claims 11 to 17, wherein the scene category of the target scene comprises at least one scene category, and the adaptation unit is configured to:
determine, based on a correspondence between a scene category and a map reconstruction sub-algorithm, at least one map reconstruction sub-algorithm respectively corresponding to the at least one scene category; and
generate, based on a map reconstruction primary algorithm and the at least one map reconstruction sub-algorithm, a map reconstruction algorithm matching the at least one scene category.

19. The apparatus according to any one of claims 11 to 18, wherein the obtaining unit is further configured to obtain a collection mode of the data collection device, and the collection mode is a single-machine collection mode or a multi-machine collection mode; and
the adaptation unit is configured to:
generate a map reconstruction algorithm matching the collection mode and the scene category.

20. The apparatus according to any one of claims 11 to 19, wherein the scene category comprises one or more of the following:
an indoor scene, an outdoor scene, a large-scale scene, a small-scale scene, a sunny-day scene, a rainy-day scene, a cloudy-day scene, a foggy-day scene, a dusty scene, a dynamic scene, a static scene, a long corridor scene, a sparse feature scene, and a high refraction and high reflection scene.

21. A computing device cluster, comprising at least one computing device, wherein each computing device comprises a processor and a memory, and
a processor in the at least one computing device is configured to execute instructions stored in a memory in the at least one computing device, so that the computing device cluster performs the method according to any one of claims 1 to 10.

22. A computer-readable storage medium, comprising computer program instructions, wherein when the computer program instructions are executed by a computing device cluster, the computing device cluster performs the method according to any one of claims 1 to 10.

23. A computer program product comprising instructions, wherein when the instructions are run by a computing device cluster, the computing device cluster is enabled to perform the method according to any one of claims 1 to 10.
